(19) Europäisches Patentamt
European Patent Office
Office européen des brevets

(11) **EP 1 524 433 B1**

(12) **EUROPÄISCHE PATENTSCHRIFT**

(45) Veröffentlichungstag und Bekanntmachung des Hinweises auf die Patenterteilung:
**08.02.2012   Patentblatt 2012/06**

(51) Int Cl.:
***F03D 7/02*** *(2006.01)*

(21) Anmeldenummer: **04023140.9**

(22) Anmeldetag: **29.09.2004**

(54) **Drehzahlregelung in einer Windenergieanlage mit zwei Näherungssensoren für die Drehzahlmessung**

Wind turbine rotational speed control using two proximity sensors for rotational speed measurement

Régulation de vitesse de rotation pour éolienne avec deux capteurs de proximité pour mesure de vitesse de rotation

(84) Benannte Vertragsstaaten:
**AT BE BG CH CY CZ DE DK EE ES FI FR GB GR HU IE IT LI LU MC NL PL PT RO SE SI SK TR**

(30) Priorität: **14.10.2003   DE 10347718**

(43) Veröffentlichungstag der Anmeldung:
**20.04.2005   Patentblatt 2005/16**

(73) Patentinhaber: **REpower Systems AG**
**22335 Hamburg (DE)**

(72) Erfinder: **Altemark, Jens, Dipl.-Ing.**
**24768 Rendsburg (DE)**

(74) Vertreter: **Hauck Patent- und Rechtsanwälte**
**Neuer Wall 50**
**20354 Hamburg (DE)**

(56) Entgegenhaltungen:
EP-A- 0 358 381        WO-A-81/01444
DE-A- 19 521 300      DE-U- 29 815 905
US-A- 3 863 235        US-A- 4 805 465
US-A- 4 847 555

**Beschreibung**

Die Erfindung bezieht sich auf ein Verfahren zur Drehzahlregelung in einer Windenergieanlage nach Patentanspruch 1.

Mit größer werdenden Windenergieanlagen steigen naturgemäß die Belastungen im Triebstrang, der normalerweise aus einem Windrotor, einem Getriebe und den Wellenabschnitten zwischen Windrotor und Getriebe sowie Getriebe und Generator besteht. Der Triebstrang ist erheblichen Biege- und Torsionsbelastungen ausgesetzt. Zu den statischen Belastungen kommen dynamische hinzu, welche insbesondere die Lager und das Getriebe erheblich beanspruchen. Es ist daher bereits bekannt geworden, über eine entsprechende Regelung des Umrichters Schwingungen im Triebstrang elektronisch zu dämpfen. Hierfür ist eine genaue Drehzahlerfassung erforderlich. Es sind verschiedene Verfahren zur Drehzahlmessung bei Windenergieanlagen bekannt geworden.

Ein bekanntes Verfahren verwendet einen sogenannten Inkrementalgeber, der die Anzahl der Impulse pro Zeiteinheit zählt. Ein derartiger Inkrementalgeber wird zumeist auf einem Wellenabschnitt auf der dem Getriebe gegenüberliegenden Seite des Generators angeordnet. Inkrementalgeber sind aufwendig und störanfällig. Eine Drehzahlmeßanordnung soll nach Möglichkeit über einen sehr langen Zeitraum präzise und ungestört arbeiten. Da aus Sicherheitsgründen ein Inkrementalgeber am Ausgang des Getriebes angeordnet sein sollte, ergibt sich für den Einbau eine schwierige und aufwendige Montage.

Als Alternative zum Inkrementalgeber ist bekannt, eine Geberscheibe zu verwenden, die auf ihrem Umfang eine Reihe gleichmäßig beabstandeter Nocken aufweist und die etwa am Ausgang des Getriebes drehfest auf dem zugeordneten Wellenabschnitt sitzt. Ein stationärer Näherungssensor erfaßt den Vorbeilauf der Nocken, und mit Hilfe eines Rechners wird die Zeit zwischen zwei benachbarten oder mehr Nocken erfaßt. Mittels der gemessenen Zeit wird die Drehzahl nach der

Formel $n1 = \dfrac{1}{t_1 * Nockenzahl}$ berechnet, wobei $t_1$

die Zeit ist, die zwischen der Annäherung oder dem Vorbeilauf von zwei benachbarten Nocken verstreicht. Es versteht sich, daß die Genauigkeit in der Fertigung der Geberscheibe die Präzision der Drehzahlmessung beeinflußt. Für eine lastoptimierte Regelung ist eine Genauigkeit von < 0,1% sowie eine Phasenverschiebung < 5° bezogen auf eine 5 Hz-Schwingung anzustreben. Eine Geberscheibe, welche diese Genauigkeit erreicht, müßte mit einer Toleranz von ≤ 0,01 mm gefertigt werden. Hierfür ist ein nicht unerheblicher Fertigungsaufwand erforderlich. Außerdem kann die Scheibe durch äußere Einwirkungen beschädigt werden, so daß die erforderliche Genauigkeit dann nicht mehr gewährleistet ist.

Aus WO 81/01444 A1 ist eine Windenergieanlage, mit einem Geschwindigkeitshaltesystem bekannt. Das Geschwindigkeitshaltesystem umfasst einen Geschwindigkeitsvariator, der mit einem Planetengetriebe verbunden ist. Die Anordnung ist derart, dass bei einer Änderung der Windgeschwindigkeit die Drehgeschwindigkeit eines Generatorschafts der Windenergieanlage konstant gehalten wird, indem der Blattwinkel in Abhängigkeit von der Änderung der Windgeschwindigkeit verändert wird. Aus EP 0 358 381 A1 ist ein Geschwindigkeitsdetektor zur Anwendung an einer Drehscheibe mit Metallzähnen bekannt. Dabei werden zwei Spulen versetzt zueinander in der Nähe der Drehscheibe angeordnet, so dass ihre Induktivität bei einem Drehen der Drehscheibe verändert wird. Ein Phasenumkehrdetektor erzeugt ein gepulstes Signal mit einer Frequenz, die repräsentativ für die Geschwindigkeit der Drehscheibe sein soll.

Der Erfindung liegt die Aufgabe zugrunde, ein Verfahren zur Drehzahlregelung in Windenergieanlagen anzugeben, das sich mit wenig aufwendigen Mitteln durchführen läßt und die erforderliche Genauigkeit für eine lastoptimierte Regelung bereitstellt.

Diese Aufgabe wird durch die Merkmale des Patentanspruchs 1 gelöst.

Bei dem erfindungsgemäßen Verfahren wird ebenfalls eine Geberanordnung verwendet, beispielsweise eine Geberscheibe von herkömmlichem Aufbau. Erfindungswesentlich ist, daß die Geberabschnitte, welche vorzugsweise im gleichmäßigen Abstand auf der Geberanordnung angeordnet sind, jeweils mit zwei in Drehrichtung von Geberanordnung oder Sensoranordnung hintereinander und in festem Abstand voneinander angeordneten Sensoren zusammenwirken, wobei ein Rechner die Zeit ermittelt, die bei Drehung der Geberanordnung mindestens ein Geberabschnitt zwischen dem ersten und zweiten Sensor benötigt. Ist der Winkelabstand α zwischen den Sensoren bekannt, ergibt sich die Drehzahl aus $n = \dfrac{\alpha}{360° * t}$ · Ist der Umfang U der Geberanordnung oder Sensoranordnung bekannt, d.h. die Länge des Kreises, den die wirksamen Geberabschnitte oder Sensoren bei Drehung beschreiben und die Länge s der Kreissehne zwischen den Sensoren oder Geberabschnitten, läßt sich die Drehzahl angenähert aus der Formel n * t = s/U errechnen, wobei t wieder die gemessene Zeit ist, die ein Geberabschnitt für die Strecke zwischen den Sensoren benötigt. Ein der errechneten Drehzahl entsprechendes Drehzahl-Istsignal wird auf einen Regler gegeben, der ein Stellsignal auf eine Verstellvorrichtung für eine Blattverstellung eines Rotors gibt, wenn das Drehzahl-Istsignal von einem Drehzahl-Sollwert abweicht.

Windenergieanlagen der jüngeren Entwicklung stellen extrem hohe Anforderungen an die technische Ausführung des Regelsystems. Einerseits sind in Windenergieanlagen extrem große Massen in Bewegung. Derzeit sind Rotorblätter bei einem Gewicht von bis zu 20 Tonnen und bis zu einer Länge von 60 Metern sehr elastische Bauteile, die sich stark durchbiegen können. Der Triebstrang, der mit seinen großen rotierenden Massen (Rotorgewicht derzeit bei 120 Tonnen, Getriebe- und Generatorgewichte bei bis zu 70 Tonnen) stellt ebenfalls ein sehr schwingungsanfälliges System dar. Gleichzeitig erfordert die 20-jährige Lebensdauer bei weitgehend unbeaufsichtigtem und ununterbrochenem Betrieb eine möglichst einfache und zuverlässige Ausführung aller Komponenten. Bei der Blattverstellung einer Windenergieanlage sind große Massen zu bewegen. Zur Regelung der Leistungsaufnahme aus dem Wind werden die Blätter mit elektrischen oder hydraulischen Blattverstellsystemen um die Längsachse verdreht. Die Blattverstellung hat zusammen mit einer Regelung des Generatormomentes die Aufgabe, die Drehzahl und die Leistung der Windenergieanlage zu regeln bzw. konstant zu halten. Steigt die Drehzahl bei Nennleistung an, wird z.B. der Blattwinkel in Richtung Fahnenstellung verstellt. Bei fallender Drehzahl wird der Blattwinkel verringert.

Tritt bei der Drehzahlmessung ein "Rauschen" auf, so wird der Blattverstellungsregler mit Fehlinformationen über die Drehzahl beaufschlagt. Nutzt man dieses Rauschen direkt als Verstellbefehl für die Rotorblätter, kommt es zu ständigen kleinen Verstellbewegungen, je nach Frequenz kann es sogar zu einem regelrechten "Zittern" kommen. Da die träge Masse von Verstellsystem und Blättern ständig beschleunigt wird, führt dies zu hohen Belastungen und einer Reduzierung der Laufdauer der beteiligten Komponenten. Da in jedem mechanischen System "Spiel" vorhanden ist (z.B. Zahnflanken im Getriebe, Führungsstangen im Bolzenauge usw.), führt dies zu zusätzlichem Verschleiß. Verstärkt wird dieser Effekt dadurch, daß durch das Spiel keine Änderung der Blattwinkel eintritt und der Regler diese durch Erhöhung des Sollwertes ausgleichen würde. Deshalb ist auch bereits bekannt geworden, ein Drehzahlsignal zu filtern. Ein Filter hat jedoch Verzögerungszeiten und auch eine Phasenverschiebung zur Folge. Somit kann nur verzögert auf die ständig fluktuierenden Windbedingungen reagiert werden, was die Regelgüte verschlechtert.

Durch ein optimales Drehzahlsignal kann eine Phasenverschiebung vermieden bzw. reduziert werden. Dies ist bei einer zunehmend großen Anzahl von in das elektrische Netz einspeisenden Windenergieanlagen von entscheidender Wichtigkeit, da nur so der Strom mit geringen Leistungsschwankungen und frei von Oberwellen (Flicker) generiert werden kann. Eine Filterung des Drehzahlsignals kann dann ausschließlich zur Vermeidung von Resonanzeffekten benutzt werden, z.B. zur Dämpfung der erwähnten Triebstrangschwingungen.

Der Abstand der Sensoren soll hierbei klein sein im Verhältnis zum Durchmesser der rotierenden Anordnung, d.h. Geber- oder Sensoranordnung, da sonst die Abstandsmessung über die Kreissehne zu Ungenauigkeiten führt.

Mit dem erfindungsgemäßen Verfahren wird ein extrem rauscharmes Drehzahlsignal gewonnen. Die Drehzahlmessung ist nicht mehr abhängig von der Genauigkeit der Geberanordnung. Ob die Geberabschnitte einen exakten Umfangsabstand voneinander aufweisen, ist nicht wesentlich. Daher ist das erfindungsgemäße Verfahren auch durch eine mechanische Verformung der Geberanordnung nicht beeinträchtigt, welche während der Montage oder aufgrund von Servicearbeiten oder sonstigen Vorgängen vorkommen kann.

Unvermeidbare Ungenauigkeiten in der Geometrie von Geberanordnungen führten bei herkömmlichen Verfahren zu einem Rauschen im Drehzahlsignal. Sie verursachten die Anzeige von Drehzahländerungen, die in Wirklichkeit nicht auftraten. Ein derartiges rauschenbehaftetes Drehzahlsignal ist ohne eine besondere aufwendige elektronische Aufbereitung für eine präzise Regelung nicht verwendbar. Das erfindungsgemäße Verfahren erlaubt eine genauere Drehzahlmessung ohne ein signifikantes Rauschen, da nur die tatsächliche Drehzahl und nicht Drehzahlschwankungen aufgrund von Ungenauigkeiten des Systems gemessen werden. Das erfindungsgemäße Verfahren führt daher zu einem stetigeren Drehzahlsignal, das sich gut für eine lastoptimierte Regelung verwenden läßt. Eine geringe Ungenauigkeit im Drehzahlsignal - absolut gesehen - ist hinnehmbar. Es kommt nicht darauf an, die absolute Geschwindigkeit präzise zu messen, sondern Schwankungen, sowie Phasenversatz zu erfassen. Denn die Rotation des gemessenen Wellenabschnitts ist aufgrund der auftretenden dynamischen Belastungen nicht völlig gleichmäßig, sondern unterliegt schwingungsabhängigen Änderungen. Die niederfrequenten Änderungen lassen sich mit dem Verfahren nach der Erfindung ausreichend genau erfassen.

Das erfindungsgemäße Verfahren setzt zumindest die Kenntnis des Abstands bzw. Winkelabstands der Sensoren voraus. Der Abstand zwischen den Sensoren kann sich unter Umständen ändern. Außerdem ist erforderlich, ihn entweder präzise einzustellen oder präzise zu messen. Beides kann zu Ungenauigkeiten führen. Daher sieht eine Ausgestaltung der Erfindung vor, daß zur Kalibrierung in einem ersten Schritt mit Hilfe eines einzelnen Sensors eine Drehzahl n1 ermittelt wird, indem die Zeit $t_1$ zwischen der Aktivierung des Sensors durch zwei oder mehr Geberabschnitte gemessen wird und in einem zweiten Schritt mittels der von einem Geberabschnitt zwischen beiden Sensoren benötigten Zeit t das Verhältnis s/U nach der Formel s/U = n1*t bestimmt wird. s ist der Abstand der Sensoren und U der Umfang des Kreises, den die Sensoren oder Geberabschnitte beschreiben. Da hierbei angenommen wird, daß die Drehzahl vom ersten zum zweiten Schritt unverändert ist, erfolgt die Messung der Zeit t vorzugsweise zeitgleich oder im Rahmen der möglichen Datenerfassungsrate eines für das Meßverfahren eingesetzten Rechners nahezu zeitgleich zum ersten Schritt (Ermittlung der Drehzahl

Durch mehrfache Wiederholung des Verfahrens läßt sich die Genauigkeit der Kalibrierung steigern, indem das Verhältnis s/U als Mittelwert der Ergebnisse der Einzelmessungen bestimmt wird. Dieser Wert wird gespeichert und dient bis zur nächsten Kalibrierung als angenommener Quotient s/U.

Um zu vermeiden, daß bei der ersten Inbetriebnahme, bei der noch kein kalibrierter Wert für den Quotienten s/U zur Verfügung steht, die Anlage zunächst mit dem nur auf einem Sensor beruhenden Meßverfahren geregelt werden muß, sieht eine vorteilhafte Weiterbildung der Erfindung vor, daß die Anlage in einem ersten Schritt mit einem angenäherten (geschätzten) Wert nach dem Verfahren der Ansprüche 1 bis 5 bestimmt wird. Somit wird durch das rauschfreie Drehzahlsignal die Betriebssicherheit aufrechterhalten und die Gefahr eventueller Schwingungen vermieden, allerdings wird ein (abhängig von der Güte des angenäherten Quotienten s/U geringer) absoluter Fehler in der Drehzahlerfassung in Kauf genommen. In einem zweiten Schritt wird mit Hilfe jeweils eines einzelnen der Sensoren eine Drehzahl n1 ermittelt, indem die Zeit zwischen der Aktivierung des Sensors durch zwei oder mehr benachbarte Geberabschnitte gemessen wird. In einem dritten Schritt wird aus einer annähernd zeitgleich zum zweiten Schritt erfolgten Messung der Zeit t das Verhältnis s/U nach der Formel s/U = n1*t neu bestimmt und für die weitere Messung in dem Rechner gespeichert.

Das beschriebene Kalibrierverfahren hat den Vorteil, daß eine exakte Messung des Abstands der Sensoren einerseits und des Umfangs des Kreises der Geberabschnitte oder Sensoren nicht erforderlich ist.

Die Sensoren sind vorzugsweise Näherungssensoren und wirken mit Geberabschnitten einer Geberanordnung zusammen, die etwa auf einem Wellenabschnitt des Triebstrangs angeordnet ist. Es ist auch denkbar, die Sensoren rotieren zu lassen und Geberabschnitte stationär anzuordnen. Eine Geberscheibe für eine Geberanordnung kann herkömmlich mit radialen Nocken am Umfang versehen sein, die in gleichem Umfangsabstand angeordnet sind. Es ist jedoch möglich, beliebige andere Geberabschnitte an einer Geberanordnung anzubringen, z.B. axiale Aussparungen oder Bohrungen, die mit den Sensoren zusammenwirken. Die Sensoren arbeiten vorzugsweise induktiv und können herkömmliche Näherungssensoren sein.

Eine Geberscheibe kann einteilig geformt und drehfest auf einem Wellenabschnitt montiert werden, beispielsweise im Bereich einer Kupplung. Alternativ ist möglich, die Geberanordnung, z.B. eine Geberscheibe, geteilt auszuführen und sie an einem gewünschten Abschnitt des Triebstrangs anzubringen.

Vorzugsweise wird die Geberanordnung an der Abtriebswelle des Getriebe angeordnet, deren Drehzahl aufgrund der Übersetzung des Getriebes signifikant größer ist als die Drehzahl der Welle des Windrotors. Es ist andererseits denkbar, die sogenannte Arretierscheibe auf der Rotorwelle als Geberscheibe auszubilden. Bekanntlich ist aus Sicherheitsgründen zwischen Getriebe und Windrotor eine Arretierscheibe angeordnet, die mit einer Verriegelung zusammenwirkt, um die Welle des Rotors und damit diesen selbst in einer bestimmten Position zu halten. Dies geschieht aus Sicherheitsgründen während der Durchführung von Wartungsarbeiten.

Die für die Blattverstellung beschriebenen Wirkungen gelten analog auch für den Triebstrang, der mit seinen großen rotierenden Massen und seiner hohen Schwingungsanfälligkeit sehr hohe Ansprüche an die Regelgüte und an die robuste Reglerauslegung stellt. Wird der Momentenregler mit einem verrauschten Drehzahlsignal als Eingangsgröße betrieben, besteht ein großes Risiko, daß es zu dynamischen Instabilitäten und somit zu mechanischen Schwingungen kommt. Eine Glättung oder Filterung des Drehzahlsignals kommt aufgrund der Verzögerungszeit bzw. der Phasenverschiebung nicht in Frage, da eine aktive Dämpfung von Triebstrangschwingungen nur durch eine sehr schnelle Regelung mit zufriedenstellenden Ergebnissen hergestellt werden kann. Es ist zwar vorstellbar, eine periodische Schwingung grundsätzlich erst mit einigen Perioden Verzögerungszeit zu dämpfen, die effektivste und belastungsgünstigste Regelung läßt sich jedoch nur mit einem rauschfreien und zuverlässigen Drehzahlsignal erzielen.

Die Erfindung soll nachfolgend anhand eines in Zeichnungen dargestellten Ausführungsbeispiels näher erläutert werden.

Fig. 1    zeigt äußerst schematisch ein Blockbild einer Windenergieanlage.

Fig. 2    zeigt schematisch eine Drehzahlmeßanordnung für die Windenergieanlage nach Fig. 1.

Fig. 3    zeigt ein Impulsdiagramm der Meßanordnung nach Fig. 2.

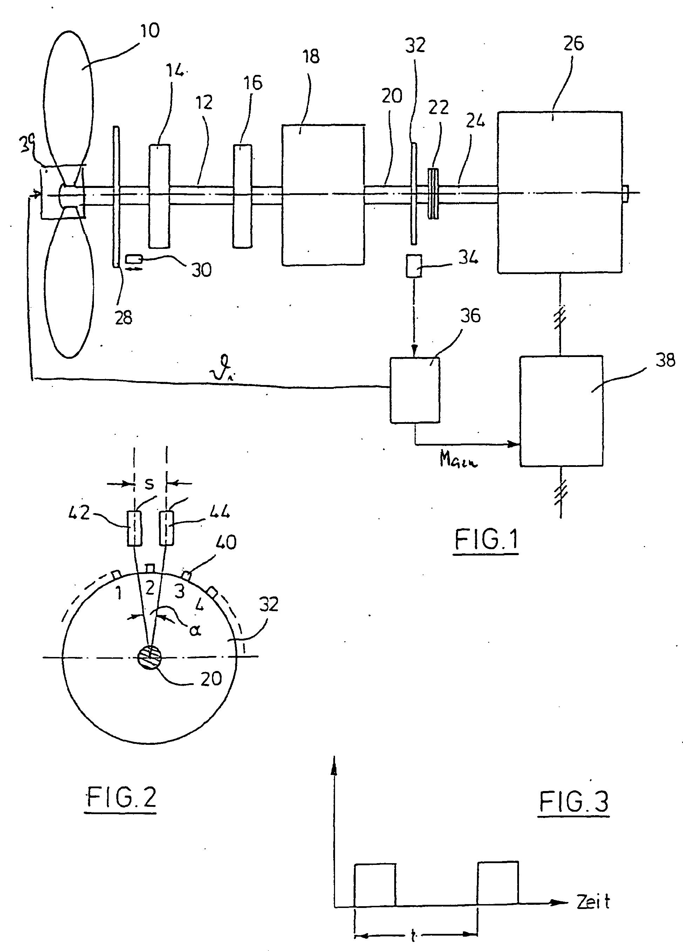

Fig. 1 zeigt einen Windrotor 10 einer Windenergieanlage, dessen Welle 12 in zwei Lagern 14, 16 gelagert ist. Die Welle 12 ist die Eingangswelle eines nicht weiter beschriebenen Getriebes 18, das die Drehzahl der Welle 12 auf eine weitaus höhere Drehzahl übersetzt, beispielsweise um den Faktor 100. Eine Ausgangswelle 20 des Getriebes 18 ist über eine Kupplung 22 mit einer Welle 24 eines Drehstromgenerators 26 gekoppelt. Zwischen dem Windrotor 10 und dem ersten Lager 14 ist eine Arretierscheibe 28 drehfest auf der Welle 12 angeordnet, die mit einem Verriegelungselement 30 zusammenwirkt. Wird das Verriegelungselement 30 z.B. in eine Öffnung oder Ausnehmung der Arretierscheibe 28 eingeführt, ist die Welle 12 damit an einer Drehung gehindert.

Nahe der Kupplung 22 ist eine Geberscheibe 32 drehfest auf dem Wellenabschnitt 20 angeordnet. Sie wirkt mit einer Sensoranordnung 34 zusammen, deren Signale auf einen Rechner 36 gegeben werden. Der Rechner 36 gibt als Regler ein Momenten-Stellsignal auf einen Umrichter 38 für den vom Generator 26 erzeugten Wechselstrom. Der Umrichter erzeugt Wechselstrom mit den Standardparametern zwecks Einspeisung in ein Netz. Hierauf soll jedoch im einzelnen nicht eingegangen werden. Es sei nur erwähnt, daß es mit Hilfe einer lastoptimierten Regelung des Umrichters 38 möglich ist, eine elektronische Schwingungsdämpfung für den Triebstrang nach Fig. 1 zu realisieren. Auch hierauf soll im einzelnen nicht näher eingegangen werden. Für eine derartige Regelung ist jedoch eine genaue Erfassung der Drehzahl am Triebstrang erforderlich.

Der Rotor 10 enthält eine Verstellvorrichtung 39 für die Blätter des Rotors 10. Vom Rechner 36 wird mindestens ein Stellsignal $\vartheta\,i$ auf die Verstellvorrichtung 39 gegeben. Bei zwei oder mehr Blättern eines Rotors kann je Blatt ein Stellsignal erzeugt werden. Der Regler befindet sich im Rechner 36. Das Drehzahl-Istsignal wird im Rechner 36 aus den Signalen der Sensoranordnung 34 errechnet und mit einem Drehzahl-Sollwertsignal verglichen zwecks Ermittlung mindestens eines Stellsignals $\vartheta\,i$ für die Blattverstellvorrichtung 39.

In Fig. 2 ist zu erkennen, daß die Geberscheibe 32 an ihrem Umfang eine Reihe von radialen Nocken 40 aufweist, die einen bestimmten gleichen Abstand voneinander haben. Am Umfang der Nockenscheibe 32 sind zwei Sensoren 42, 44 in einem Abstand s angeordnet. Die in Drehrichtung der Geberscheibe hintereinander angeordneten Sensoren 42, 44 ergeben im wesentlichen die Sensoranordnung 34 nach Fig. 1. Der Abstand der Nocken 40 ist vorzugsweise größer als der Abstand s der Sensoren 42, 44. Die Sensoren 42, 44 sind vorzugsweise radial angeordnet (nicht gezeigt), so daß der Abstand keine gerade Strecke, sondern ein Bogen mit dem Bogenwinkel $\alpha$ ist. Danach ergibt sich die Drehzahl n aus

$$\frac{\alpha}{360°*t},$$ wobei $\alpha$ der Bogenwinkel zwischen den Sensoren und t die Zeit ist, welche einen Nocken vom ersten zum zweiten Sensor benötigt.

Die Geberscheibe 32 ist z.B. einteilig aus Metall, beispielsweise Eisen, gefertigt, und die Sensoren 42, 44 sind Näherungssensoren, die ein Signal erzeugen, wenn ein Nocken 40 sich in die Nähe des Sensors 42, 44 begibt. Betrachtet man einen einzelnen Nocken, beispielsweise Nocken 1, ergeben sich annähernd Rechteckimpulse gemäß Fig. 3, wobei im Zeitdiagramm von Fig. 3 die Zeit t diejenige ist, die einen Nocken 40 für die Strecke zwischen Sensor 42 und Sensor 44 benötigt, wenn sich die Geberscheibe 34 dreht. Die Zeit t wird im Rechner 36 gemessen, und im Rechner erfolgt eine Bestimmung der Drehzahl nach der Formel

$$n=\frac{\alpha}{360°*t}\ \text{oder}\ n=\frac{s}{t*U},$$ wobei $\alpha$ bzw. s der Abstand der Sensoren ist, t die Zeit gemäß Fig. 3 und U der Umfang der Geberscheibe 34, und zwar im Bereich der radialen Enden der Nocken 40. Da stets jeweils nur ein Nocken 40 für die Berechnung der Zeit t betrachtet wird, wird auf diese Weise die wahre Drehzahl des entsprechenden Wellenabschnitts, hier des Wellenabschnitts 20 gemessen, unabhängig davon, ob die Nocken 40 im Hinblick auf ihren Abstand präzise gearbeitet sind.

Wie ersichtlich, ist für die beschriebene Drehzahlmessung die Kenntnis des Bogenwinkels $\alpha$ oder der Parameter s und U erforderlich. Durch ein Kalibrierverfahren läßt sich der Bogenwinkels $\alpha$ oder der Quotient s/U berechnen, ohne daß eine präzise Messung vorgenommen werden muß. In einem ersten Schritt wird mittels eines Sensors eine Drehzahl n1 ermittelt und in einem zweiten Schritt, vorzugsweise zeitgleich, das Verhältnis s/U nach der Formel s/U = n1*t bestimmt. Dieser Vorgang kann mehrfach wiederholt werden, um die Genauigkeit zu erhöhen.

Um zu vermeiden, daß bei der ersten Inbetriebnahme, bei der noch kein kalibrierter Wert für den Quotienten s/U zur Verfügung steht, die Anlage zunächst mit dem nur auf einen Sensor beruhenden Meßverfahren geregelt werden muß, sieht eine vorteilhafte Weiterbildung der Erfindung vor, daß die Drehzahl in einem ersten Schritt mit einem angenäherten (geschätzten) Wert nach dem Verfahren der Ansprüche 1 bis 5 bestimmt wird. Somit wird durch das rauschfreie Drehzahlsignal die Betriebssicherheit aufrechterhalten und die Gefahr eventueller Schwingungen vermieden, allerdings wird ein (abhängig von der Güte des angenäherten Quotienten s/U geringer) absoluter Fehler in der Drehzahlerfassung in Kauf genommen. In einem zweiten Schritt wird mit Hilfe jeweils eines einzelnen der Sensoren eine Drehzahl n1 ermittelt, indem die Zeit zwischen der Aktivierung des Sensors durch zwei oder mehr benachbarte Geberabschnitte gemessen wird. In einem dritten Schritt wird aus einer annähernd zeitgleich zum zweiten Schritt erfolgten Messung der Zeit t das Verhältnis s/U nach der Formel s/U = n1*t neu bestimmt und für die weitere Messung in der Auswerteeinheit gespeichert.

Eine derartige Kalibrierung kann beliebig häufig vorgenommen und insbesondere vor jeder Inbetriebnahme der Windenergieanlage durchgeführt werden.

Wie ersichtlich, sind die Sensoren stationär und die Geberscheibe als rotierend beschrieben. Es versteht sich, daß auch eine kinematische Umkehr möglich ist. Ferner können die Sensoren mit axial gerichteter Achse angeordnet und die Geberabschnitte von Ausnehmungen oder Bohrungen einer Geberanordnung gebildet sein.

**Patentansprüche**

1.  Verfahren zur Drehzahlregelung einer Windenergieanlage, bei dem mit Hilfe einer Geberanordnung mit mindestens einem Geberabschnitt und einer Sensoranordnung mit mindestens zwei Sensoren (42, 44), welche bei einer relativen Drehbewegung zwischen Geberanordnung und Sensoranordnung auf den Geberabschnitt ansprechen, durch Auswertung der Signale der Sensoranordnung die Relativdrehzahl errechnet wird, wobei die Zeit t, die jeweils ein Geberabschnitt zwischen zwei im festen Abstand voneinander, in Drehrichtung hintereinander angeordneten Sensoren (42, 44) benötigt, gemessen wird, und anhand der Zeit t und den geometrischen Gegebenheiten von Geber- und Sensoranordnung die Drehzahl n errechnet wird, und wobei ein der errechneten Drehzahl entsprechendes Drehzahl-Istsignal auf einen Regler (36) gegeben wird, der ein Stellsignal $\vartheta$ i auf eine Verstellvorrichtung (39) für eine Blattverstellung eines Rotors (10) gibt, wenn das Drehzahl-Istsignal von einem Drehzahl-Sollwert abweicht.

2. Verfahren nach Anspruch 1, **dadurch gekennzeichnet, daß** die Geberanordnung drehfest mit einer rotierenden Welle (20) der Windenergieanlage verbunden ist und die Sensoranordnung stationär angeordnet ist.

3. Verfahren nach Anspruch 1, **dadurch gekennzeichnet, daß** die Sensoranordnung drehfest mit einer rotierenden Welle der Windenergieanlage verbunden ist und die Geberanordnung stationär angeordnet ist.

4. Verfahren nach einem der Ansprüche 1 bis 3, **dadurch gekennzeichnet, daß** die beiden Sensoren (42, 44) in Drehrichtung im Winkelabstand ($\alpha$) voneinander angeordnet sind und die Drehzahl n nach

   der Formel $n = \dfrac{\alpha}{360° * t}$ errechnet wird.

5. Verfahren nach einem der Ansprüche 1 bis 3, **dadurch gekennzeichnet, daß** die beiden Sensoren (42, 44) in Drehrichtung in einem die Länge der Kreissehne angebenden Abstand s voneinander angeordnet sind und die Drehzahl n näherungsweise errechnet wird aus der Zeit t, dem Abstand s und dem Umfang U des Kreises, den die wirksamen Geberabschnitte beschreiben, nach der Formel n = s/(U* t).

6. Verfahren nach einem der Ansprüche 1 bis 5, **dadurch gekennzeichnet, daß** zu Kalibrierzwecken in einem ersten Schritt mit Hilfe jeweils eines einzelnen der Sensoren (42, 44) die Drehzahl n1 ermittelt wird, und in einem zweiten Schritt aus einer vorzugsweise zeitgleich zum ersten Schritt erfolgten Messung der Zeit t das Verhältnis s/U nach der Formel s/CJ = n1*t bestimmt wird.

7. Verfahren nach Anspruch 6, **dadurch gekenn-**

**zeichnet, daß** beide Meßschritte zur Erhöhung der Genauigkeit mehrfach durchgeführt werden und das Verhältnis s/U als Mittelwert der Ergebnisse der Einzelmessungen bestimmt wird.

8. Verfahren nach einem der Ansprüche 1 bis 7, **dadurch gekennzeichnet, daß** die Drehzahl bei der Inbetriebnahme in einem ersten Schritt mit einem angenäherten Quotienten s/LT nach dem Verfahren nach einem der Ansprüche 1 bis 5 bestimmt wird, und in einem zweiten Schritt mit Hilfe jeweils eines einzelnen der Sensoren (42, 44) eine Drehzahl n1 ermittelt wird, indem die Zeit zwischen der Aktivierung des Sensors (42, 44) durch zwei oder mehr benachbarte Geberabschnitte gemessen wird und in einem dritten Schritt aus einer annähernd zeitgleich zum zweiten Schritt erfolgten Messung der Zeit t das Verhältnis silo nach der Formel s/U = n1*t neu bestimmt und gespeichert wird.

9. Verfahren nach einem der Ansprüche 1 bis 8, **dadurch gekennzeichnet, daß** eine Geberscheibe (32) eine Anzahl von radialen Nocken (40) aufweist, die in gleichem Abstand auf dem Umfang der Geberscheibe (32) angeordnet sind und die Sensoren (42, 44) Näherungssensoren sind.

10. Verfahren nach einem der Ansprüche 1 bis 8, **dadurch gekennzeichnet, daß** eine Geberscheibe eine Anzahl von axialen Aussparungen oder Bohrungen aufweist und die Sensoren axial angeordnet sind.

11. Verfahren nach einem der Ansprüche 1 bis 10, **dadurch gekennzeichnet, daß** die Geberanordnung oder die Geberscheibe (32) einteilig geformt ist.

12. Verfahren nach einem der Ansprüche 1 bis 10, **dadurch gekennzeichnet, daß** die Geberanordnung oder die Geberscheibe geteilt ausgeführt ist mit der Teilungslinie entlang einem Durchmesser.

13. Verfahren nach einem der Ansprüche 1 bis 13, **dadurch gekennzeichnet, daß** die Geberanordnung auf dem Wellenstrang zwischen einem Getriebe (18) und einem Generator (26) angebracht ist.

14. Verfahren nach einem der Ansprüche 1 bis 12, **dadurch gekennzeichnet, daß** die Geberanordnung auf dem Wellenstrang zwischen dem Windrotor (10) und dem Getriebe (18) angebracht ist.

15. Verfahren nach einem der Ansprüche 1 bis 14, **dadurch gekennzeichnet, daß** die Geberanordnung von einer Arretierscheibe (28) oder einem Schraubenflansch gebildet ist.

16. Verfahren zur Drehzahlregelung einer Windenergieanlage, bei dem mit Hilfe einer Geberanordnung mit mindestens einem Geberabschnitt und einer Sensoranordnung mit mindestens zwei Sensoren (42, 44), welche bei einer relativen Drehbewegung zwischen Geberanordnung und Sensoranordnung auf den Geberabschnitt ansprechen, durch Auswertung der Signale der Sensoranordnung die Relativdrehzahl errechnet wird wobei die Zeit t, die jeweils ein Geberabschnitt zwischen zwei im festen Abstand voneinander, in Drehrichtung hintereinander angeordneten Sensoren (42, 44) benötigt, gemessen wird, und anhand der Zeit t und den geometrischen Gegebenheiten von Geber- und Sensoranordnung die Drehzahl n errechnet wird, und wobei ein der errechneten Drehzahl entsprechendes Drehzahl-Istsignal auf einen Regler (36) gegeben wird zur Bestimmung eines Momenten-Stellsignals (Mg$_{en}$) eines Generators (26), das auf einen dem Generator (26) nachgeschalteten Umrichter (38) gegeben wird.

## Claims

1. A method for regulating speed in a wind turbine, wherein the relative speed is calculated with the assistance of an encoder arrangement having at least one encoder section and a sensor arrangement having at least two sensors (42, 44) that respond to the encoder section when there is a relative of rotary movement between the encoder arrangement and sensor arrangement by evaluating the sensors of the sensor arrangement, wherein the time "t" is measured that requires an encoder section between two sensors (42, 44) arranged sequentially in the direction of rotation at a fixed distance from each other, and the time "t" and the geometric relationship between the encoder and sensor arrangement are used to calculate the speed n, and wherein an actual speed signal corresponding to the calculated speed is sent to a controller (36) that sends a setting signal $\vartheta$ *i* to an adjusting device (39) for the blade adjustment of a rotor (10) when the actual speed signal deviates from a target speed.

2. The method according to claim 1, **characterized in that** encoder arrangement is connected in a non-rotating manner to a rotating shaft (20) of the wind turbine, and the sensor arrangement is arranged in a stationary manner.

3. The method according to claim 1, **characterized in that** the sensor arrangement is connected in a non-rotating manner to a rotating shaft of the wind turbine, and the encoder arrangement is arranged in a stationary manner.

4. The method according to one of claims 1 to 3, **characterized in that** the two sensors (42, 44) are arranged at an angular distance ($\alpha$) from each other in the direction of rotation, and the speed "n" is calculated according to the formula $n = \frac{\alpha}{360° \cdot t}$.

5. A method according to one of claims 1 to 3, **characterized in that** the two sensors (42, 44) are arranged in the direction of rotation at a distance "s" from each other that represents the length of the cord of a circle, and the speed "n" is calculated as an approximation from the time "t", the distance "s" and the circumference U of the circle that describes the effective encoder sections according to the formula n = s/(U * t).

6. The method according to one of claims 1 to 5, **characterized in that** the speed n1 is calculated for calibration purposes in a first step with the assistance of a single one of the sensors (42, 44) and, in a second step, the ratio s/U is determined according to formula s/U = n1*t from a measurement of the time "t" and that is preferably simultaneous with the first step.

7. The method according to claim 6, **characterized in that** both measuring steps are repeated several times to increase the precision, and the ratio s/U is determined as an average of the results of the individual measurements.

8. The method according to one of claims 1 to 7, **characterized in that** the speed at startup is determined in a first step using an approximated quotient s/U by means of the method according to one of claims 1 to 5 and, in a second step, a speed n1 is determined with the assistance of a single one of the sensors (42, 44) by measuring the time between the activation of the sensor (42, 44), by two or more neighboring encoder sections and, in a third step, the ratio s/U is determined according to formula s/U = n1*t from a measurement of the time "t" that is preferably approximately simultaneous with the second step, and saved.

9. The method according to one of claims 1 to 8, **characterized in that** an encoder disc (32) has a plurality of radial cams (40) that are arranged evenly spaced on the perimeter of the encoder disc (32), and the sensors (42, 44) are proximity sensors.

10. The method according to one of claims 1 to 8, **characterized in that** an encoder disc has a plurality of axial cutouts or holes, and the sensors are axially arranged.

11. The method according to one of claims 1 to 10, **characterized in that** the encoder arrangement or encoder disc (32) is formed as a single part.

**12.** The method according to one of claims 1 to 10, **characterized in that** the encoder arrangement or encoder disc is designed partitioned with the parting line along a diameter.

**13.** The method according to one of claims 1 to 13, **characterized in that** the encoder arrangement is attached to the shaft assembly between a gearbox (18) and a generator (26).

**14.** The method according to one of claims 1 to 12, **characterized in that** the encoder arrangement is attached to the shaft assembly between the wind rotor (10) and the gearbox (18).

**15.** The method according to one of claims 1 to 14, **characterized in that** the encoder arrangement is formed by a locking disk (28) or a threaded flange.

**16.** The method for regulating speed in a wind turbine, wherein the relative speed is calculated with the assistance of an encoder arrangement having at least one encoder section and a sensor arrangement having at least two sensors (42, 44) that respond to the encoder section when there is a relative of rotary movement between the encoder arrangement and sensor arrangement by evaluating the signals of the sensor arrangement, wherein the time "t" is measured that requires an encoder section between two sensors (42, 44) arranged sequentially in the direction of rotation at a fixed distance from each other, and the time "t" and the geometric relationship between the encoder and sensor arrangement are used to calculate the speed n, and wherein an actual speed signal corresponding to the calculated speed is sent to a controller (36) to determine a momentary setting signal ($M_{gen}$) of a generator (26) that is sent to a converter (38) downstream from the generator (26).

**Revendications**

**1.** Procédé de régulation de la vitesse de rotation d'une éolienne, dans lequel la vitesse de rotation relative est calculée par analyse des signaux d'un dispositif de capteur à l'aide d'un dispositif de transmetteur avec au moins une section de transmetteur et d'un dispositif de capteur avec au moins deux capteurs (42, 44) qui, lors d'un mouvement de rotation relatif entre le dispositif de transmetteur et le dispositif de capteur, réagissent à la section de transmetteur, le temps t qui est respectivement nécessité par une section de transmetteur entre deux capteurs (42, 44) disposés l'un derrière l'autre dans le sens de rotation, avec un intervalle fixe entre eux, étant mesuré, et la vitesse de rotation n étant calculée à l'aide du temps t et des données géométriques du dispositif de transmetteur et du dispositif de capteur, et un signal effectif de vitesse de rotation correspondant à la vitesse de rotation calculée étant fourni à un régulateur (36) qui fournit un signal de réglage $\vartheta$ *i* à un dispositif de réglage (39) pour un réglage de pale d'un rotor (10) quand le signal effectif de vitesse de rotation diverge d'une valeur de consigne de vitesse de rotation.

**2.** Procédé selon la revendication 1, **caractérisé en ce que** le dispositif de transmetteur est raccordé, bloqué en rotation, à un arbre rotatif (20) de l'éolienne, et ce que le dispositif de capteur est disposé de façon stationnaire.

**3.** Procédé selon la revendication 1, **caractérisé en ce que** le dispositif de capteur est raccordé, bloqué en rotation, à un arbre rotatif de l'éolienne, et **en ce que** le dispositif de transmetteur est disposé de façon stationnaire.

**4.** Procédé selon une des revendications 1 à 3, **caractérisé en ce que** les deux capteurs (42, 44) sont disposés avec un intervalle angulaire ($\alpha$) l'un par rapport à l'autre dans le sens de rotation, et **en ce que** la vitesse de rotation n est calculée selon la formule

$$n = \frac{\alpha}{360° * t}$$

**5.** Procédé selon une des revendications 1 à 3, **caractérisé en ce que** les deux capteurs (42, 44) sont disposés avec un intervalle s entre eux qui indique la longueur de la corde de cercle, et **en ce que** la vitesse de rotation n est calculée de façon approchée à partir du temps t, de l'intervalle s et de la circonférence U du cercle que décrivent les sections de transmetteur efficaces, selon la formule n = s/(U * t).

**6.** Procédé selon une des revendications 1 à 5, **caractérisé en ce que**, à des fins d'étalonnage, la vitesse de rotation n1 est déterminée dans une première étape à l'aide respectivement d'un seul des capteurs (42, 44), et **en ce que**, dans une deuxième étape, le rapport s/U est défini selon la formule s/U = n1*t à partir d'une mesure du temps t effectuée de préférence en même temps que la première étape.

**7.** Dispositif selon la revendication 6, **caractérisé en ce que** les deux étapes de mesure sont effectuées plusieurs fois pour augmenter la précision, et **en ce que** le rapport s/U est défini en tant que valeur moyenne des résultats des mesures individuelles.

**8.** Dispositif selon une des revendications 1 à 7, **caractérisé en ce que** la vitesse de rotation est définie, lors de la mise en marche, dans une première étape, avec un quotient approché s/U selon le procédé selon une des revendications 1 à 5, et ce qu'une vitesse de rotation n1 est déterminée dans une deuxième étape à l'aide respectivement d'un seul des capteurs (42, 44) en mesurant le temps entre l'activation du capteur (42, 44) par deux sections de transmetteur voisines ou davantage, et **en ce que**, dans une troisième étape, à partir d'une mesure du temps t effectuée à peu près en même temps que la deuxième étape, le rapport s/U est redéfini selon la formule s/U = n1*t et enregistré.

9. Dispositif selon une des revendications 1 à 8, **caractérisé en ce qu'**un disque de transmetteur (32) présente un certain nombre de cames (40) radiales qui sont disposées à intervalles réguliers sur la circonférence du disque de transmetteur (32), et **en ce que** les capteurs (42, 44) sont des capteurs de proximité.

10. Dispositif selon une des revendications 1 à 8, **caractérisé en ce qu'**un disque de transmetteur présente un certain nombre d'alésages ou évidements axiaux, et **en ce que** les capteurs sont disposés de façon axiale.

11. Dispositif selon une des revendications 1 à 10, **caractérisé en ce que** le dispositif de transmetteur ou le disque de transmetteur (32) est formé d'une seule pièce.

12. Dispositif selon une des revendications 1 à 10, **caractérisé en ce que** le dispositif de transmetteur ou le disque de transmetteur est réalisé de façon séparée, avec la ligne de division le long d'un diamètre.

13. Dispositif selon une des revendications 1 à 13, **caractérisé en ce que** le dispositif de transmetteur est placé sur la ligne d'arbre entre une boîte de vitesses (18) et une génératrice (26).

14. Dispositif selon une des revendications 1 à 12, **caractérisé en ce que** le dispositif de transmetteur est placé sur la ligne d'arbre entre le rotor d'éolienne (10) et la boîte de vitesses (18).

15. Dispositif selon une des revendications 1 à 14, **caractérisé en ce que** le dispositif de transmetteur est formé d'une rondelle d'arrêt (28) ou d'une bride à vis.

16. Procédé de régulation de la vitesse de rotation d'une éolienne, dans lequel la vitesse de rotation relative est calculée par analyse des signaux du dispositif de capteur à l'aide d'un dispositif de transmetteur avec au moins une section de transmetteur et d'un dispositif de capteur avec au moins deux capteurs (42, 44) qui, lors d'un mouvement de rotation relatif entre le dispositif de transmetteur et le dispositif de capteur, réagissent à la section de transmetteur, le temps t qui est respectivement nécessité par une section de transmetteur entre deux capteurs (42, 44) disposés l'un derrière l'autre dans le sens de rotation, avec un intervalle fixe entre eux, étant mesuré, et la vitesse de rotation n étant calculée à l'aide du temps t et des données géométriques du dispositif de transmetteur et dispositif de capteur, et un signal effectif de vitesse de rotation correspondant à la vitesse de rotation calculée étant fourni à un régulateur (36) pour la définition d'un signal de réglage du moment ($M_{gen}$) d'une génératrice (26) qui est fourni à un convertisseur monté en aval de la génératrice (26).

FIG.1

FIG.2

FIG.3

Zeit

**IN DER BESCHREIBUNG AUFGEFÜHRTE DOKUMENTE**

**In der Beschreibung aufgeführte Patentdokumente**

- WO 8101444 A1
- EP 0358381 A1